# EUROPEAN PATENT APPLICATION

(11) **EP 0 886 419 A2**
(43) Date of publication of application: **23.12.1998**
(21) Application number: 98111192.5
(22) Date of filing: 18.06.1998
(51) Int. Cl.: H04M 1/72

(54) **Cordless telephone system and its independent base station and mobile station**

(30) Priority: 19.06.1997 JP 162143/97
(71) Applicant: NEC CORPORATION, Tokyo (JP)
(72) Inventor: Tsujita, Shigeru, Nakahara-ku, Kawasaki-shi, Kanagawa (JP)
(74) Representative: VOSSIUS & PARTNER

(57) **Abstract**

A cordless telephone system and its independent base station and mobile station enables a dual purpose mobile station (402) to be executed an incoming processing from a public base station (403) during indoor self-supporting call operation, while holding or disconnecting the indoor self-supporting call, thus enabling it to be shifted to an outdoor public call. The independent base station is provided with a public reception antenna (109), a reception radio circuit (108), a mobile station reception channel CODEC (107), a public reception control section (106), and a public reception interface (105a), enabling it to receive a call signal from the public base station to the dual purpose mobile station. Due to this constitution, the independent base station receives the call signal from the public base station to the dual purpose mobile station during indoor self-supporting call operation, if the user responds thereto, the independent base station shifts to the outdoor public call operation by the fact that the dual purpose mobile station holds or disconnects the indoor self-supporting call operation so that the dual purpose mobile station executes incoming processing in between the public base station and mobile station.

## Description

The present invention relates to a cordless telephone system and its independent base station and mobile station. More to particularly the present invention relates to a cordless telephone system and its independent base station and mobile station in which the mobile station is connected to a mobile communication network or a fixed network, and it is capable of executing radio communication both to outdoor public base station (hereinafter referring to public base station) in which original communication service control is executed, and to cordless telephone system independent base station (herein after referring to home independent base station) connected to the fixed network.

Formerly, a public base station and a home independent base station, and cordless telephone system mobile station (hereinafter referring to dual purpose mobile station) which is capable of executing time-division multiplex radio communication enable a telephone call executed through the public base station (hereinafter referring to outdoor public telephone call), and a telephone call executed through a home independent base station (hereinafter referring to indoor self-supporting call) to be performed.

Hereinafter, the conventional cordless telephone system is described referring to the drawings.

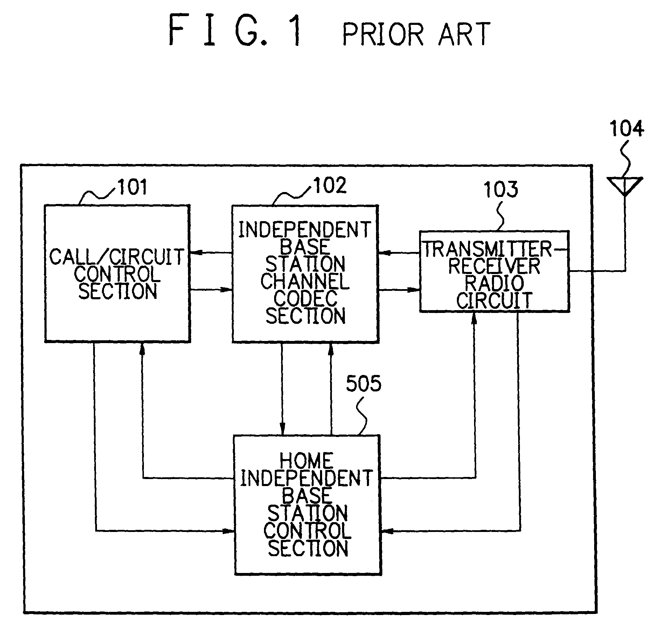

Fig. 1 is a block diagram showing a configuration of the home independent base station of the conventional cordless telephone system. The device of the independent base station comprises an antenna 104 for performing transmission-reception of radio wave, a transmitter-receiver radio circuit 103 for executing demodulation of received radio waves and modulation of transmission data, an independent base station channel CODEC section 102 for executing both of decoding of demodulation signal from the transmitter-receiver radio circuit 103 and coding of transmission data, a call / circuit control section 101 for executing voice coding of received sound signal from the fixed network and voice decoding of voice data decoded at the independent base station channel CODEC section 102 and for receiving a call signal from the fixed network, a home independent base station control section 505 for executing power control among the call / circuit control section 101, the independent base station channel CODEC section 102, and transmitter-receiver radio circuit 103, and for executing communication protocol control in between the independent base station and mobile station.

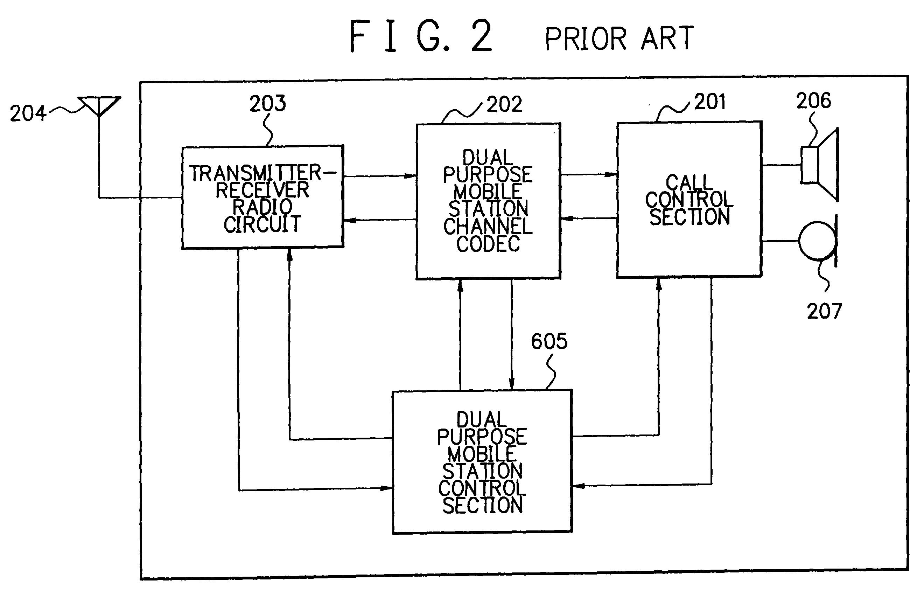

Fig. 2 is a block diagram showing a configuration of dual purpose mobile station of the conventional cordless telephone system. The conventional dual purpose mobile station comprises an antenna 204 for transmission-reception of radio wave, a transmitter-receiver radio circuit 203 for executing demodulation of received radio wave and modulation of transmission data, a dual purpose mobile station channel CODEC section 202 for executing decoding of demodulation signal from the transmitter-receiver radio circuit 203 and coding of transmission data, a speaker 206 for outputting voice, a microphone 207 for inputting voice, a telephone call control section 201 for executing voice coding of received sound signal from the microphone 207 and voice decoding of voice data decoded at the dual purpose mobile station channel CODEC section 202, and a dual purpose mobile station control section 605 for executing power control among the telephone call control section 201, the dual purpose mobile station channel CODEC section 202, and the transmitter-receiver radio circuit 203, and for executing communication protocol control in between the home independent base station and the dual purpose mobile station control section or in between the public base station and the same.

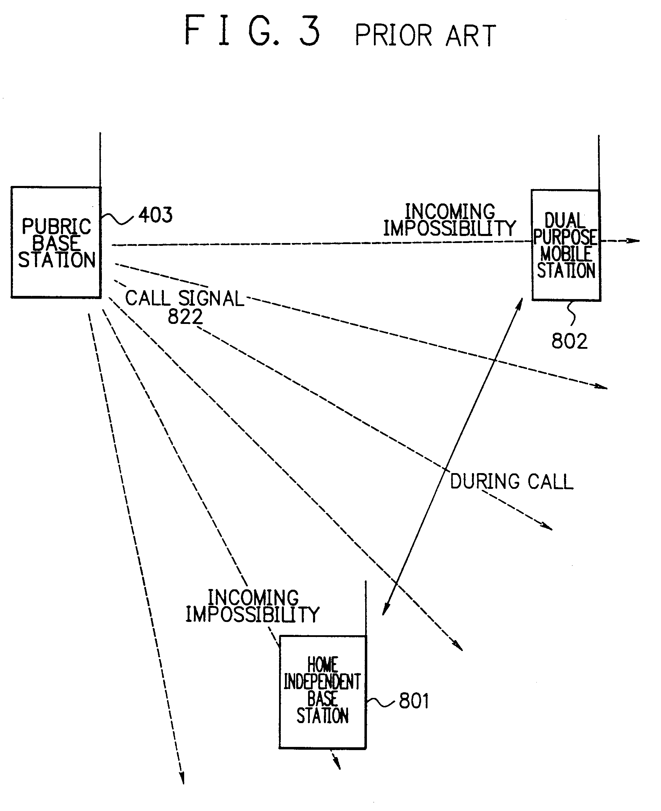

Fig. 3 is a view showing operation environment of the conventional cordless telephone system. In this conventional cordless telephone system, a dual purpose mobile station 802 is capable of executing the telephone call through the home independent base station 801, and is capable of receiving radio waves from the public base station 403. However, when the dual purpose mobile station is of the telephone call through the home independent base station, it is impossible to perform an incoming because the dual purpose mobile station 802 is incapable of receiving the radio waves from the public base station 403 so that it is incapable of receiving a call signal (822). The dual purpose mobile station receives the call signal which both the base station and the home independent base station transmit intermittently while waiting the incoming from both of the public base station and the home independent base station.

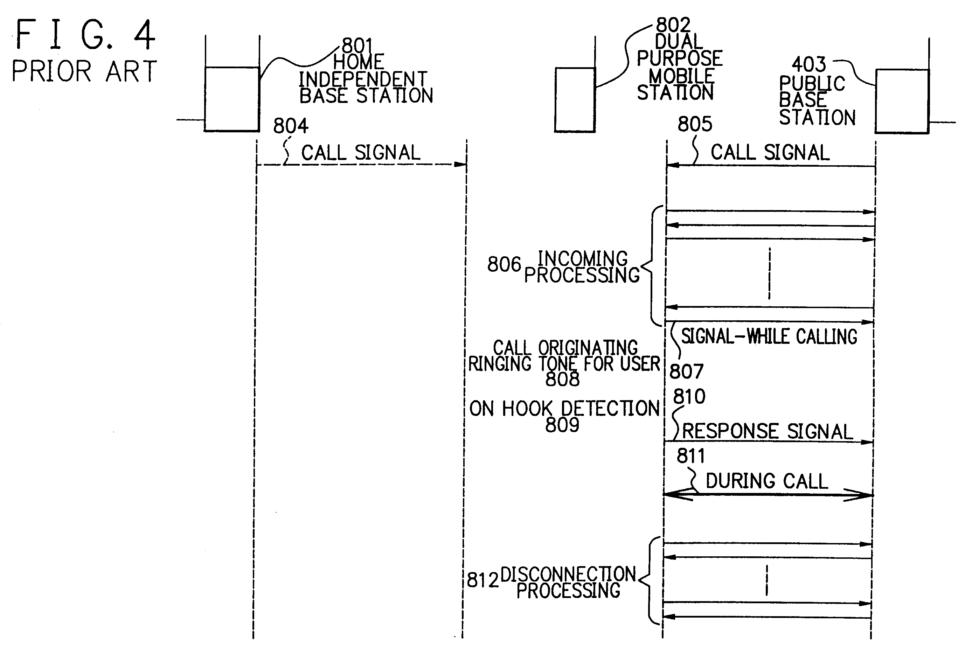

Subsequently, as shown in Fig. 4, when a timing of reception processing is overlapped each other, the reception processing of the call signal (804) from the public station is preferred, so that the dual purpose mobile station does not perform the reception processing of the call signal (804) from the home independent base station. For this reason, the home independent base station judges that the dual purpose mobile station does not exist within area capable of receiving radio wave because of no response from the dual purpose mobile station in relation to the call signal. Further, in the reception processing, it is also capable of preferring the home independent base station. In the dual purpose mobile station, when receiving the call signal (805) from the public base station, thus executing the incoming processing in between the dual purpose mobile station and the public base station. The dual purpose mobile station transmits an in-calling signal (807) notifying that the dual purpose mobile station is calling the user toward the public base station at the end of the incoming processing, simultaneously, transmitting ringing tone (808) for notifying the incoming to the user, subsequently when detecting response (off hook (809)) from the user, thus shifting to the telephone call (811) while transmitting response signal (810) to the public base station. Then, when the telephone call is terminated, returning to the incoming waiting state, while executing the disconnection processing (812).

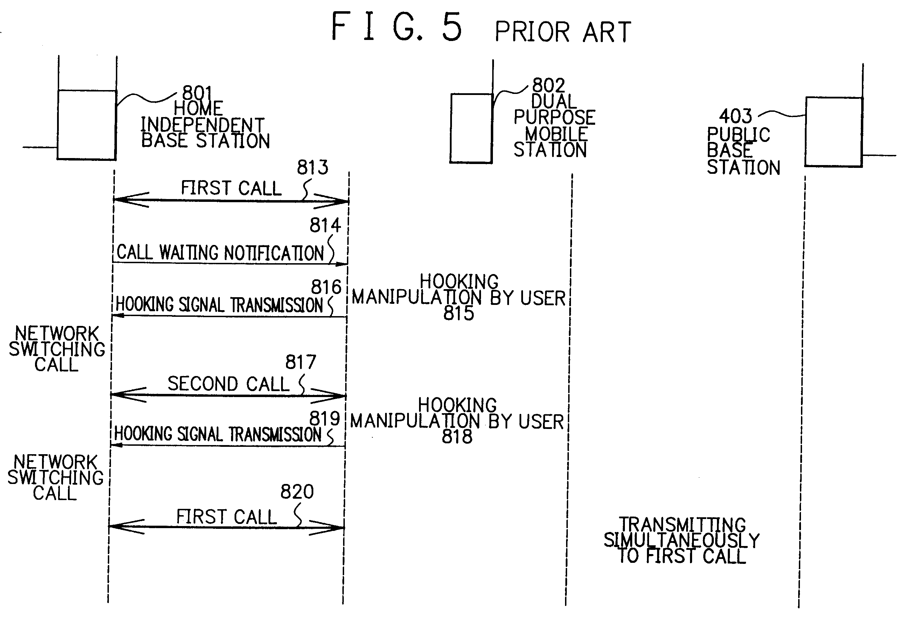

Fig. 5 is a view showing operation of the conventional call waiting notification (catch-phone). The call waiting notification is adapted in both of the fixed network and the mobile communication network as shown in the Japanese Patent Application Laid-Open No. HEI 06-85916 and the Japanese Patent Application Laid-Open No. HEI 6-6854. There occurs a separated incoming during the dual purpose mobile station is of a first telephone call (813) through the home independent base station. The home independent base station causes the call waiting notification to be transmitted (813) to the dual purpose mobile station, simultaneously, originating a ringing tone for notifying the incoming to the user. Subsequently, when there is hooking manipulation (815) from the user, the dual purpose mobile station transmits the hooking signal (816). Then the network switches to a second telephone call, thus the second telephone call 817 becomes possible. When the second telephone call is terminated and the user implements hooking manipulation 818 again, the dual purpose mobile station transmits the hooking signal (819), thus returning to the first telephone call (820) due to the switching of the network.

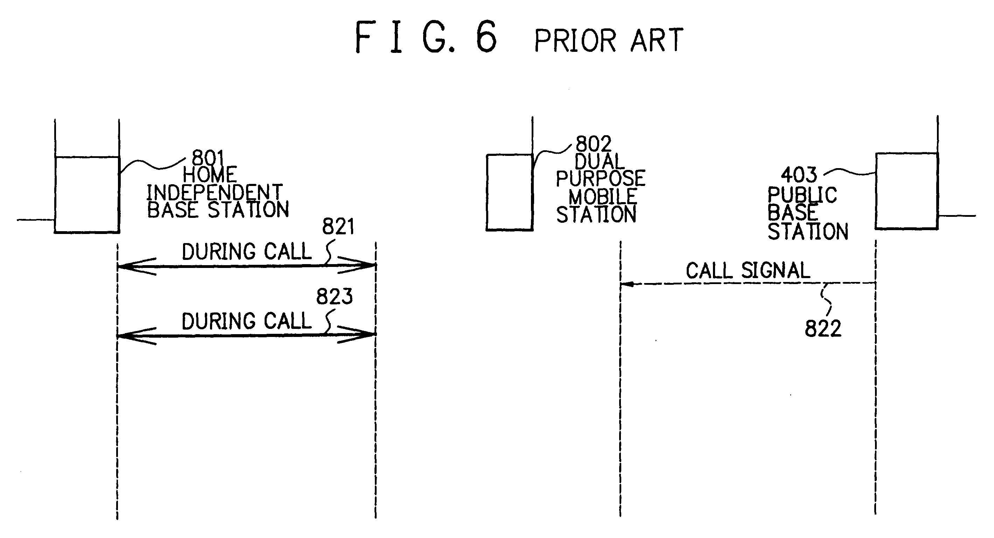

However, as shown in Fig. 6, although the call signal is transmitted (822) from the public base station to the dual purpose mobile station while the dual purpose mobile station is of the indoor self-supporting telephone call (821), the dual purpose mobile station is incapable of performing the incoming with the result that the dual purpose mobile station continues the indoor self-supporting telephone call (823).

This is the reason why, as shown in Fig. 1, the home independent base station of the conventional cordless telephone system comprises the antenna 104 for performing transmission-reception of radio waves, the transmitter-receiver radio circuit 103 for executing both of demodulation of received radio wave and modulation of transmission data, the independent base station channel CODEC section 102 for executing both of decoding of the demodulation signal from the transmitter-receiver radio circuit 103 and coding of transmission data, the call / circuit control section 101 for executing voice coding of sound signal received from the fixed network and voice decoding of the voice data decoded at the independent base station channel CODEC section 102, and for receiving the call signal from the fixed network, and the home independent base station control section 505 for executing power control of the call / circuit control section 101, the independent base station channel CODEC section 102, and the transmitter-receiver radio circuit 103, and for executing the communication protocol control in between the mobile station and the independent base station, thereby, the home independent base station does not possess means for receiving the call signal transmitted from the public base station to the dual purpose mobile station. As shown in Fig. 2, the dual purpose mobile station of the conventional cordless telephone system comprises the antenna 204 for performing transmission-reception of radio waves, the transmitter-receiver radio circuit 203 for executing both of demodulation of received radio waves and modulation of transmission data, the dual purpose mobile station channel CODEC section 202 for executing both of decoding of the demodulation signal from the transmitter-receiver radio circuit 203 and coding of the transmission data, the speaker 206 for outputting voice, the microphone 207 for inputting voice, the telephone call control section 201 for executing both of voice coding of sound signal received from the microphone 207 and voice decoding of the sound data decoded at the dual purpose mobile station channel CODEC section 202, and the dual purpose mobile station control section 605 for executing power control of the telephone call control section 201, the dual purpose mobile station channel CODEC section 202, and the transmitter-receiver radio circuit 203, and for executing the communication protocol control in between the dual purpose mobile station and the home independent base station or the public base station, thereby the dual purpose mobile station does not possess the means for receiving the call signal transmitted asynchronously with the sound signal during telephone call through the home independent base station. In conclusion, although the call signal is transmitted (822) from the public base station to the dual purpose mobile station while the dual purpose mobile station is of the indoor self-supporting telephone call (821), the dual purpose mobile station is incapable of performing the incoming.

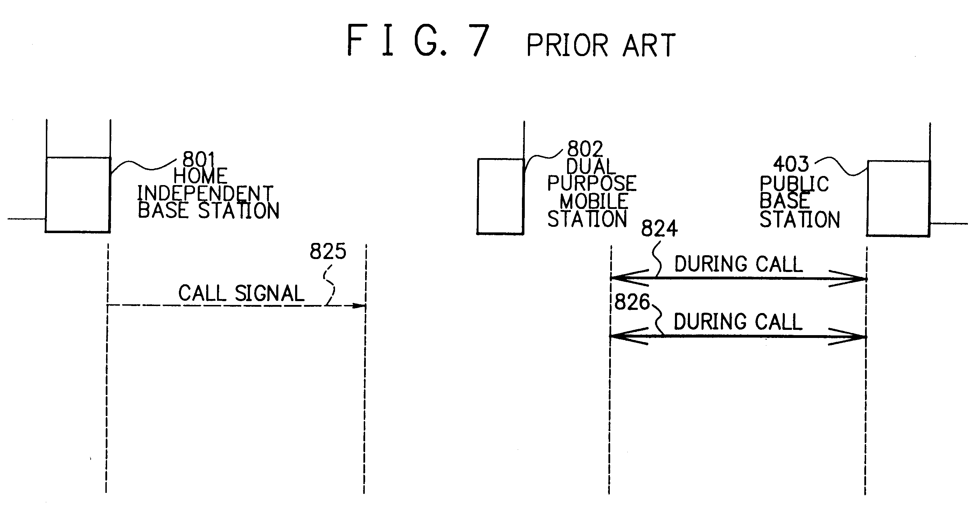

Similarly, as shown in Fig. 7, although the call signal is transmitted (825) from the home independent base station to the dual purpose mobile station while the dual purpose mobile station is of the outdoor public telephone call, the dual purpose mobile station is incapable of performing the incoming, with the result that the dual purpose mobile station continues the indoor self-supporting telephone call (826). Because, this is similar to the above described case of indoor self-supporting telephone call. The dual purpose mobile station does not possess the means for receiving radio waves which is transmitted separately during the telephone call through the public base station, and the public base station is incapable of receiving the call signal transmitted from the home independent base station to the dual purpose mobile station because the public base station is incapable of finding the frequency of radio wave by which the home independent base station transmits the call signal, or the number of the dual purpose mobile station in the cordless telephone system.

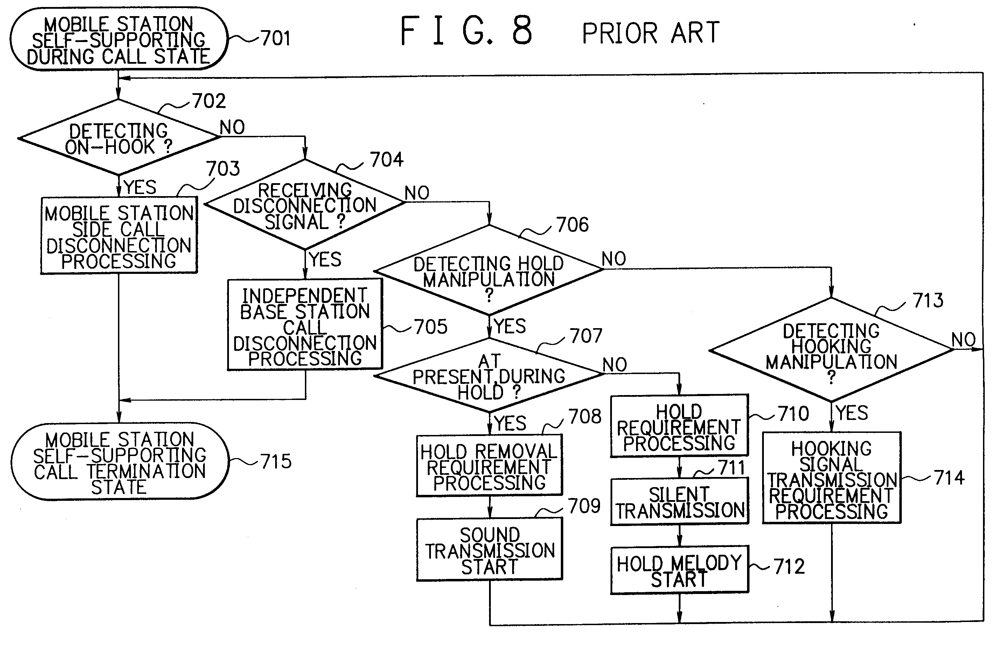

Fig. 8 is a flow chart showing operation of the dual purpose mobile station control section while the dual purpose mobile station is of the indoor self-supporting telephone call. In the condition of the indoor self-supporting telephone call (701), when the dual purpose mobile station detects on-hook (702), shifting to telephone call end state (715) while executing telephone call disconnection processing (703) which is actuated from the mobile station. When the dual purpose mobile station control section does not detect the on-hook (702), but receives the disconnection signal from the side of the home independent base station (704), shifting to telephone call end state (715) while executing the telephone call disconnection processing (705) which is actuated from the side of the independent base station. The dual purpose mobile station control section does not receive disconnection signal from the home independent base station (704), but detects the hold manipulation by the user (706), and the indoor self-supporting telephone call is of the hold state (707), thus starting transmission of voice (709) while executing processing for removing the hold state of the indoor self-supporting telephone call (708) which is maintained in the state of the hold. If the user does not hold the indoor self-supporting telephone call (707), executing the processing to hold the indoor self-supporting telephone call (710). The dual purpose mobile station makes transmitting voice silent (711), thus ringing a hold-melody (712) for notifying the hold to the user. When the dual purpose mobile station does not detect the hold-manipulation by the user (706), but detects the hooking manipulation by the user (713), executing transmission processing requirement of the hooking signal to the home independent base station. When the hooking manipulation by the user is not detected (713), the dual purpose mobile station maintains the indoor self-supporting telephone call.

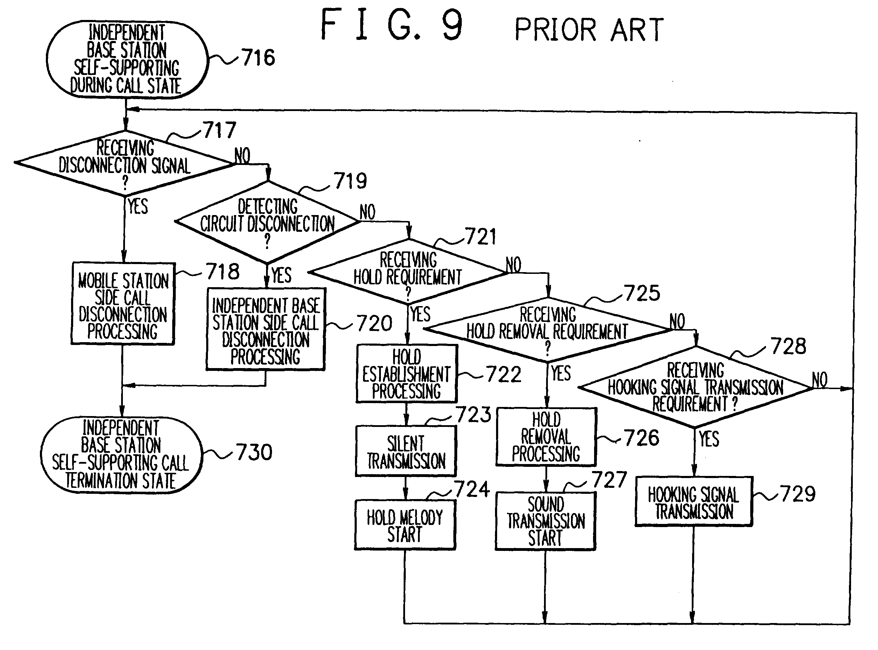

Fig. 9 is a flow chart showing operation of the home independent base station control section while the dual purpose mobile station is of the indoor self supporting telephone call. In the condition of the indoor self-supporting telephone call (716), when the home independent base station control section receives the disconnection signal from the dual purpose mobile station (717), shifting to the telephone call end state (730) while executing the telephone call disconnection processing which is actuated from the side of the mobile station (718). The home independent base station does not receive the disconnection signal from the dual purpose mobile station (717), but detects circuit disconnection (719), shifting to the telephone call end state (730) while executing the telephone call disconnection processing (720) which is actuated from the side of the independent base station. When the home independent base station does not detect the circuit disconnection (719), but receives the telephone call holding requirement from the dual purpose mobile station (721), executing hold set processing (722) to make transmitting voice silent (723), thus ringing the hold-melody (724) for notifying the hold state to the user. When the home independent base station does not receive the telephone call holding requirement from the dual purpose mobile station (721), but receives the hold removal requirement (725), restarting transmission of voice (727) while executing the hold removal processing (726). When the home independent base station control section does not receive the hold removal requirement from the dual purpose mobile station (725), but receives the hooking signal transmission requirement (728), thus transmitting the hooking signal to the fixed network (729). While when the home independent base station does not receive the hooking signal transmission requirement (728), maintaining the indoor self-supporting telephone call.

The problem points of the above-described conventional example are that although the public base station transmits the call signal to the dual purpose mobile station while the dual purpose mobile station is of during telephone call state to the home independent base station, the dual purpose mobile station is incapable of performing the incoming thereof, consequently, the dual purpose mobile station is incapable of responding to the outdoor public telephone call during indoor self-supporting telephone call. Because the configuration of the dual purpose mobile station does not enable it to receive the call signal transmitted with the different frequency from the signal of the indoor self-supporting telephone call and with the different timing therefrom.

In view of the foregoing, it is an object of the present invention to provide a cordless telephone system and its independent base station and mobile station which enable a home independent base station to receive a call signal transmitted from a public base station to a dual purpose mobile station instead of the dual purpose mobile station while the dual purpose mobile station is speaking in between the home independent base station and the dual purpose mobile station in cases where the dual purpose mobile station is capable of receiving both radio waves of the public base station and the home independent base station, subsequently, the home independent base station transmits a call waiting notification signal which denotes that an accompanying control channel which is capable of performing transmission-reception of a control signal during the telephone call has received the call signal toward the dual purpose mobile station, the dual purpose mobile station enables an incoming from the public base station to be implemented by receiving the call waiting notification signal, thus notifying the incoming from the public base station occurring during indoor self-supporting telephone call to the user of the dual purpose mobile station, with the result that the cordless telephone system is capable of responding thereto.

Features of arrangements to be described below, by way of example in illustration of the invention are the provision of a cordless telephone system and its independent base station and mobile station in which the mobile station is connected to mobile communication network or fixed network, and it is capable of executing radio communication both to outdoor public base station being executed therein communication service control of originality of the mobile communication, and cordless telephone system independent base station connected to the fixed network.

In one arrangement to be described below by way of example in illustration of the invention, a cordless telephone system includes an independent base station which is connected to a fixed network, a mobile station which is connected to the independent base station and either to a peculiar mobile communication network or a fixed network, and a public base station in which an original communication service control of the mobile communication is implemented, wherein when the mobile station is speaking through the independent base station, the public base station transmits a call signal to the mobile station, the independent base station receives a call signal instead of a mobile station and transmits a call waiting notification signal which represents reception of the call signal to the mobile station during the telephone call in between the mobile station and the independent base station, the mobile station receives the call waiting notification signal from the independent base station, before executing the incoming processing in between the mobile station and the public base station while executing the hold operation of the present telephone call temporarily, when the incoming processing ends, calling the user by returning to the telephone call, and when there is a response from the user, enabling the mobile station itself to execute the telephone call to the public base station while either disconnecting or holding the telephone call toward the independent base station, and when the telephone call toward the public base station is terminated, if the telephone call for the independent base station is maintained the hold state, enabling the telephone call to continue by removing the hold state.

In one particular arrangement to be described in illustration of the present invention, by way of example, there is an independent base station which includes an antenna for performing transmission-reception of radio wave, a transmitter-receiver radio circuit for executing both of demodulation of received radio wave and modulation of transmission data, an independent base station channel CODEC section for executing both of decoding of demodulation signal from the transmitter-receiver radio circuit and coding of transmission data, a call / circuit control section for executing both of voice coding of a sound signal receiving from a fixed network, and voice decoding of a voice data which is decoded at the independent base station channel CODEC section, and for receiving a call signal from the fixed network, a home independent base station control section for executing communication protocol control among the call / circuit control section, the independent base station channel CODEC section, a power source control of the transmitter-receiver radio circuit and a mobile station, a public reception antenna for receiving radio wave which is transmitted from a public base station, a reception radio circuit for executing demodulation of received radio wave from the public reception antenna, a mobile station reception channel CODEC section for executing decoding of demodulation signal from the reception radio circuit, a public reception control section for detecting a call signal for the mobile station from decoded data from the mobile station reception channel CODEC section to notify to the home independent base station control section, and a public reception interface section which is provided within the home independent base station control section for receiving call signal detection notification from the public reception control section, wherein the independent base station receives a call signal which is transmitted from the public base station to the mobile station during the telephone call through the independent base station, subsequently, the mobile station receives call waiting notification signal from the independent base station, before the mobile station disconnects the telephone call through the independent base station by manipulation of the user with the result that it is capable of shifting to the telephone call through the public base station.

In one yet particular arrangement to be described in illustration of the present invention, by way of example, there is the independent base station which receives the call signal which is transmitted from the public base station to the mobile station during the telephone call state through the self supporting base station, subsequently, the mobile station receives the call waiting notification signal from the independent base station, before the mobile station shifts to the telephone call through the public base station while holding the telephone call temporarily through the independent base station by manipulation of the user, then causing the on-hold state to be removed after disconnection of the telephone call through the public base station, with the result that it is capable of being returned to the telephone call through the independent base station.

In another arrangement to be described below by way of example in illustration of the present invention, there is a mobile station which includes an antenna for performing transmission-reception of radio wave, a transmitter-receiver radio circuit for executing both of demodulation of received radio wave and modulation of transmission data, a mobile station channel CODEC section for executing both of decoding of demodulation signal from the transmitter-receiver radio circuit and coding of the transmission data, a speaker for outputting voice, a microphone for inputting voice, a telephone call control section for executing both of voice coding of sound signal received from the microphone and voice decoding of voice data decoded at the mobile station channel CODEC section, a mobile station control section for executing both of power control of the telephone call control section, the mobile station channel CODEC section, and the transmitter-receiver radio circuit and communication protocol control, and a call waiting notification detecting section which is provided in the mobile station control section, being capable of receiving the call waiting notification signal which represents that the public base station transmits call signal to the mobile station through the independent base station while the mobile station control section is speaking through the independent base station.

In another arrangement to be described below by way of example in illustration of the present invention, there is an independent base station which includes an antenna for performing transmission-reception of radio wave, a transmitter-receiver radio circuit for executing both of demodulation of received radio wave and modulation of transmission data, a independent base station channel CODEC section for executing both of decoding of demodulation signal from the transmitter-receiver radio circuit and coding of the transmission data, a call / circuit control section for executing voice coding of a sound signal received from a fixed network, and voice decoding of a voice data which is decoded at the independent base station channel CODEC section, and for receiving a call signal from the fixed network, a home independent base station control section for executing communication protocol control among the call / circuit control section, the independent base station channel CODEC section, a power source control of the transmitter-receiver radio circuit and a mobile station, a public reception antenna for receiving radio wave which is transmitted from a public base station, a reception radio circuit for executing demodulation of received radio wave from the public reception antenna, a mobile station reception channel CODEC section for executing decoding of demodulation signal from the reception radio circuit, and a public reception control section for detecting a call signal for the mobile station among the decoded data from the mobile station reception channel CODEC section to notify to the home independent base station control section, wherein when the public reception interface section receives a call signal detection notification from the public reception control section, the public base station transmits the call waiting notification signal notifying that it causes the call signal to be transmitted to the mobile station.

In yet another arrangement to be described below by way of example in illustration of the present invention, in an independent base station the home independent base station control section, the public reception interface section, and the public reception control section constitute one block or a plurality of blocks.

In yet another arrangement to be described below by way of example in illustration of the present invention, in an independent base station, the independent base station channel CODEC section and the mobile station reception channel CODEC section constitute one block or a plurality of blocks.

In yet another arrangement to be described below by way of example in illustration of the present invention, in an independent base station, the transmitter-receiver radio circuit and the reception radio circuit constitute one functional block or a plurality of functional blocks.

As explained above, the home independent base station of the cordless telephone system according to the present invention, especially, receives the call signal from the public base station during indoor self-supporting telephone call to transmit the call waiting notification signal denoting that the accompanying control channel causes the call signal to be received. Subsequently, the dual purpose mobile station enables the incoming from the public base station to be performed by virtue of the fact that the dual purpose mobile station receives the call waiting notification signal. More concretely, the dual purpose mobile station of the present invention comprises the antenna for performing transmission-reception of the radio waves, the transmitter-receiver radio circuit for executing both of demodulation of received radio waves and modulation of transmission data, the dual purpose mobile station channel CODEC section for executing both of decoding of demodulation signal from the transmitter-receiver radio circuit and coding of the transmission data, the speaker for outputting voice, the microphone for inputting voice, the telephone call control section for executing voice coding of sound signal received from the microphone and voice decoding of the voice data decoded at the dual purpose mobile station channel CODEC section, and the dual purpose mobile station control section for executing both of the power control and the communication protocol control of the telephone call control section, the dual purpose mobile station channel CODEC section, and the transmitter-receiver radio circuit, in addition thereto there is provided the call waiting notification detection section which is capable of detecting the call waiting notification signal transmitted in such a way that the home independent base station transmits by using accompanying control channel during indoor self-supporting telephone call.

Further, the home independent base station of the present invention comprises the antenna for performing transmission-reception of the radio waves, the transmitter-receiver radio circuit for executing demodulation of received radio waves and modulation of transmission data, the independent base station channel CODEC section for executing both of decoding of demodulation signal from the transmitter-receiver radio circuit and coding of the transmission data, the call / circuit control section for executing both of voice coding of sound signal received from the fixed network and voice decoding of the voice data decoded at the independent base station channel CODEC section, and for receiving the call signal transmitted from the fixed network, the home independent base station for executing both of the power control among the call / circuit control section, the independent base station channel CODEC section, and the transmitter-receiver radio circuit and the communication protocol control in between mobile station and the independent base station, in addition thereto there is provided with the public reception interface section for notifying detection of reception of the call signal transmitted from the public base station to the dual purpose mobile station by using the accompanying control channel toward the dual purpose mobile station, the public reception antenna for receiving radio waves which is transmitted from the public base station, the reception radio circuit for executing demodulation of received radio wave from the public reception antenna, the mobile station reception channel CODEC section for executing decoding of the demodulation signal from the reception radio circuit, and the public reception control section which detects the call signal for the dual purpose mobile station among the decoding data from the mobile station reception channel CODEC section to notify it to the public reception interface section. Consequently, the home independent base station receives call signal transmitted from the public base station to the dual purpose mobile station during indoor self-supporting telephone call, the accompanying control channel enables the incoming to be notified to the dual purpose mobile station, thus the dual purpose mobile station is capable of performing the incoming.

The home independent base station receives the radio waves from the public base station by the public reception antenna in order to receive the control signal from the public base station during the indoor self-supporting telephone call, thus causing the reception radio circuit to demodulate it to be decoded at the channel CODEC section. The public reception control section receives the call signal intermittently while deciding the reception timing of the control signal which the public base station transmits from the content of the decoded reception data, when the public reception control section receives the call signal to the dual purpose mobile station, notifying it to the home independent base station control section through the public reception interface section, subsequently the home independent base station control section transmits the call waiting notification signal to the dual purpose mobile station by using the accompanying control channel. The dual purpose mobile station which receives the call waiting notification signal causes the dual purpose base station control section to recognize the call waiting notification signal during indoor self-supporting telephone call, thus executing the incoming processing in between the public base station and the dual purpose mobile station while holding the telephone call temporarily to notify the incoming to the user. By virtue of this operation, the user can find the incoming from the public station during the indoor self-supporting telephone call, it is capable of responding thereto. When the dual purpose mobile station detects the response from the user, thus holding or disconnecting the indoor self-supporting telephone call to shift to the outdoor public telephone call. When the outdoor public telephone call ends, the dual purpose mobile station implements the disconnection processing between the public base station and the dual purpose mobile station, and when the dual purpose mobile station is of the hold of the indoor self-supporting telephone call, continuing the indoor self-supporting telephone call while removing the hold state, while when the dual purpose mobile station is of disconnection state, terminating the telephone call.

The above and further objects and novel features of the invention will be more fully understood from the following detailed description when the same is read in connection with the accompanying drawings. It should be expressly understood, however, that the drawings are for purpose of illustration only and are not intended as a definition of the limits of the invention.

### BRIEF DESCRIPTION OF THE DRAWINGS

Fig. 1 is a view showing a functional block configuration of the conventional home independent base station;
Fig. 2 is a view showing a functional block configuration of the conventional dual purpose mobile station;
Fig. 3 is a view showing operation environment of the conventional cordless telephone system;
Fig. 4 is a sequence chart showing operation when call signal from both of the home independent base station and the public base station is transmitted simultaneously to the dual purpose mobile station in the conventional cordless telephone system;
Fig. 5 is a sequence chart showing operation when the dual purpose mobile station receives call waiting notification signal from the home independent base station during indoor self-supporting telephone call in the conventional cordless telephone system;
Fig. 6 is a sequence chart showing operation when the public base station transmits call signal to the dual purpose mobile station during self-supporting telephone call in the conventional cordless telephone system;
Fig. 7 is a sequence chart showing operation when the home independent base station receives call signal to the dual purpose mobile station during public telephone call in the conventional cordless telephone system;
Fig. 8 is a flow chart showing operation at the time indoor self-supporting telephone call of the conventional dual purpose mobile station control section;
Fig. 9 is a flow chart showing operation at the time indoor self-supporting telephone call of the conventional home independent base station control section ;
Fig. 10 is a view showing functional block configuration of a home independent base station according to the present invention;
Fig. 11 is a view showing functional block configuration of a dual purpose mobile station according to the present invention;
Fig. 12 is a block diagram showing operation environment of the cordless telephone system according to the present invention;
Fig. 13 is a sequence chart showing operation when call signal is transmitted from the public base station during self-supporting telephone call in a first embodiment of the cordless telephone system according to the present invention;
Fig. 14 is a sequence chart showing operation when call signal is transmitted from the public base station during self-supporting telephone call in a second embodiment of the cordless telephone system according to the present invention;
Fig. 15 is a flow chart showing operation at the time indoor self-supporting telephone call of the dual purpose mobile station control section according to the present invention;
Fig. 16 is a flow chart showing operation when switching from indoor self-supporting telephone call of the dual purpose mobile station control section of the first embodiment of the invention to outdoor public telephone call;
Fig. 17 is a flow chart showing operation when switching from indoor self-supporting telephone call of the dual purpose mobile station control section of the second embodiment of the invention to outdoor public telephone call; and
Fig. 18 is a flow chart showing operation at the time indoor self-supporting telephone call of the self-supporting base station control section according to the present invention.

### DETAILED DESCRIPTION OF THE PREFERRED EMBODIMENTS

A preferred embodiment of the present invention will now be described in detail referring to the accompanying drawings.

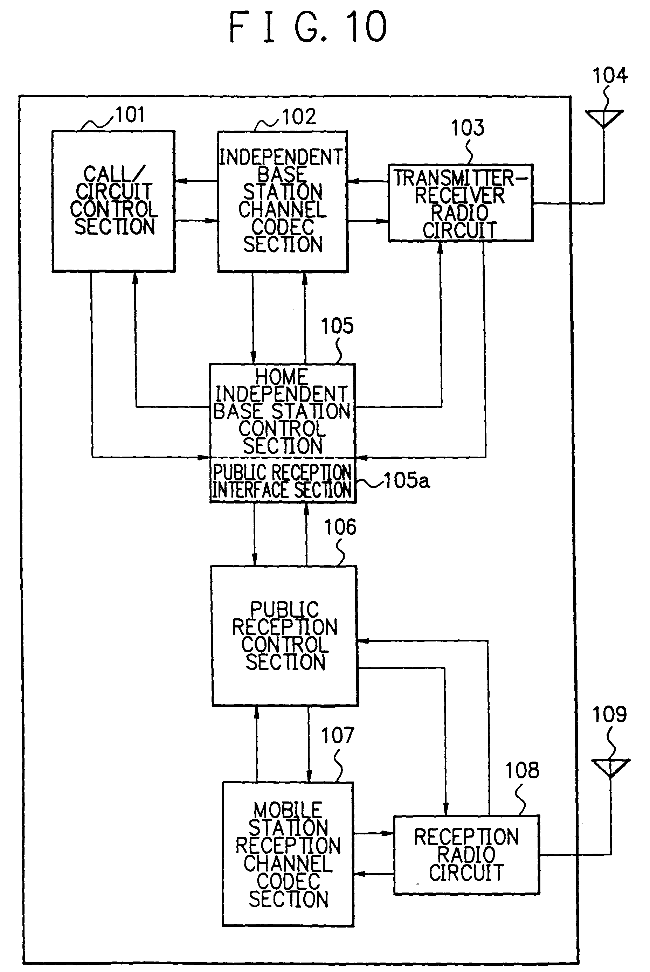

Fig. 10 is a block diagram showing a configuration of a cordless telephone system according to the present invention. A home independent base station of the present invention comprises an antenna 104 for performing transmission-reception of radio wave, a transmitter-receiver radio circuit 103 for executing both of demodulation of reception radio wave, and modulation of transmission data, a independent base station channel CODEC section 102 for executing both of decoding of demodulation signal from the transmitter-receiver radio circuit 103, and coding of transmission data, a call / circuit control section 101 for executing both of voice coding received sound signal from fixed network, and voice encoding of demodulated voice data from the independent base station channel CODEC section 102, and for receiving of call signal from the fixed network, a home independent base station control section 105 for executing power control among the call / circuit control section 101, the independent base station channel CODEC section 102, and the transmitter-receiver radio circuit 103, and for executing communication protocol control in between the independent base station control section and the mobile station in addition thereto there is provided public reception interface section 105a which notifies reception of call signal to the dual purpose mobile station from the public base station in such a way that the public reception interface section 105a notifies it using an accompanying control channel to the dual purpose mobile station, a public reception antenna 109 for receiving radio wave transmitted from the public base station, a reception radio circuit 108 for executing demodulation of reception radio wave from the public reception antenna 109, a mobile station reception channel CODEC section 107 for executing decoding of a demodulation signal from the reception radio circuit 108, and a public reception control section 106 for detecting a call signal of the dual purpose mobile station among the decoded data from the mobile station reception channel CODEC section 107 to notify to the public reception interface section 105a.

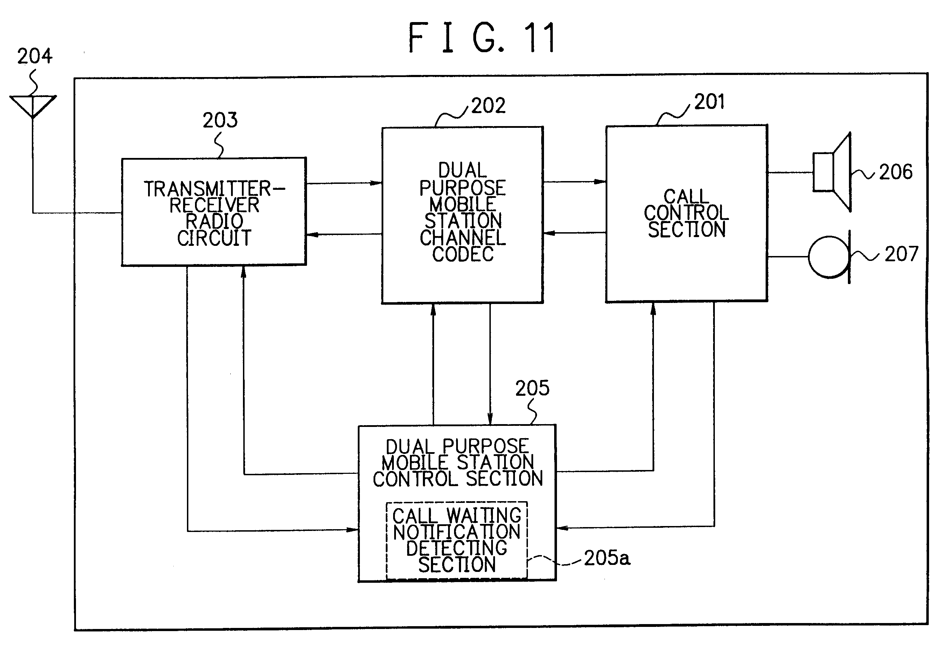

Next, Fig. 11 is a block diagram showing configuration of internal section of dual purpose mobile station of the present invention. The dual purpose mobile station of the present invention comprises an antenna 204 for performing transmission-reception of radio wave, a transmitter-receiver radio circuit 203 for executing both of demodulation of received radio wave and modulation of transmission data, a dual purpose mobile station channel CODEC section 202 for executing both of decoding of demodulation signal from the transmitter-receiver radio circuit 203 and coding of transmission data, a speaker 206 for outputting voice, a microphone 207 for inputting voice, a telephone call control section 201 for executing both of voice coding of sound signal received from the microphone 207 and voice decoding of voice data decoded at the dual purpose mobile station channel CODEC section 202, a dual purpose mobile station control section 205 for executing power control among the telephone call control section 201, the dual purpose mobile station channel CODEC section 202, and the transmitter-receiver radio circuit 203, and for executing communication protocol control in between the dual purpose mobile station control section and the home independent base station or in between the public base station and the same, in addition thereto, there is provided a call waiting notification detecting section 205a which is capable of detecting notification notifying that call signal is transmitted to the dual purpose mobile station from the public base station during indoor self-supporting telephone call by means of accompanying control channel.

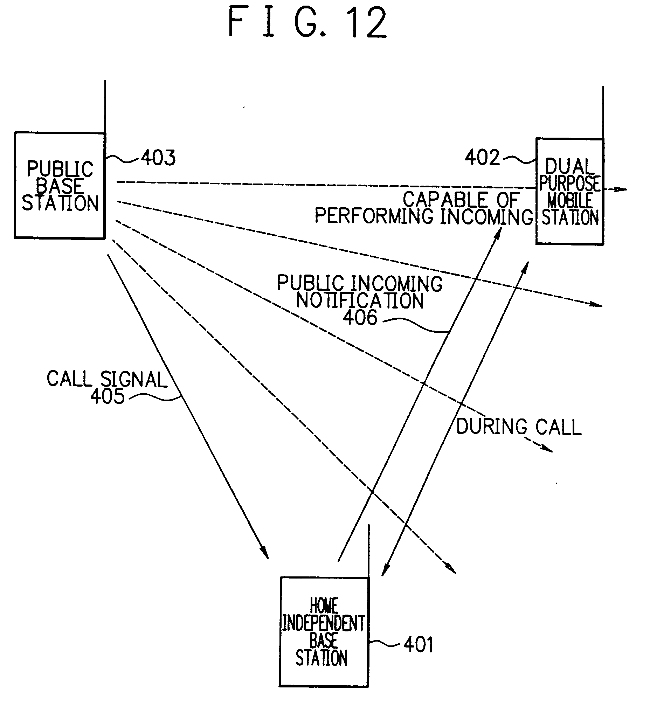

Fig. 12 is a block diagram showing an operation environment of the cordless telephone system of the present invention. The dual purpose mobile station 402 is capable of executing the telephone call through the home independent base station 401, and further the dual purpose mobile station 402 has the condition that it is capable of receiving radio wave from the public base station 403. When the dual purpose mobile station 402 is of the telephone call state through the home independent base station 401, the dual purpose mobile station 402 is incapable of receiving radio wave from the public base station 403, however the home independent base station 401 receives radio waves from the public base station 403 instead of the dual purpose mobile station 402. The home independent base station 401 causes received radio wave at the public reception antenna 109 to demodulate by means of the reception radio circuit 108, decoding it by means of the mobile station channel CODEC section 107, detecting the call signal by means of the public reception control section 106, and notifying it to the home independent base station control section 105 through public reception interface section 105a. The home independent base station 401 transmits the call waiting notification signal (406) to the dual purpose mobile station 402 using accompanying control channel, thus the dual purpose mobile station 402 receives the call waiting notification signal. As a result thereof, the dual purpose mobile station 402 is capable of being received from the public base station 403.

Next, a first embodiment of the invention will be described referring to drawings.

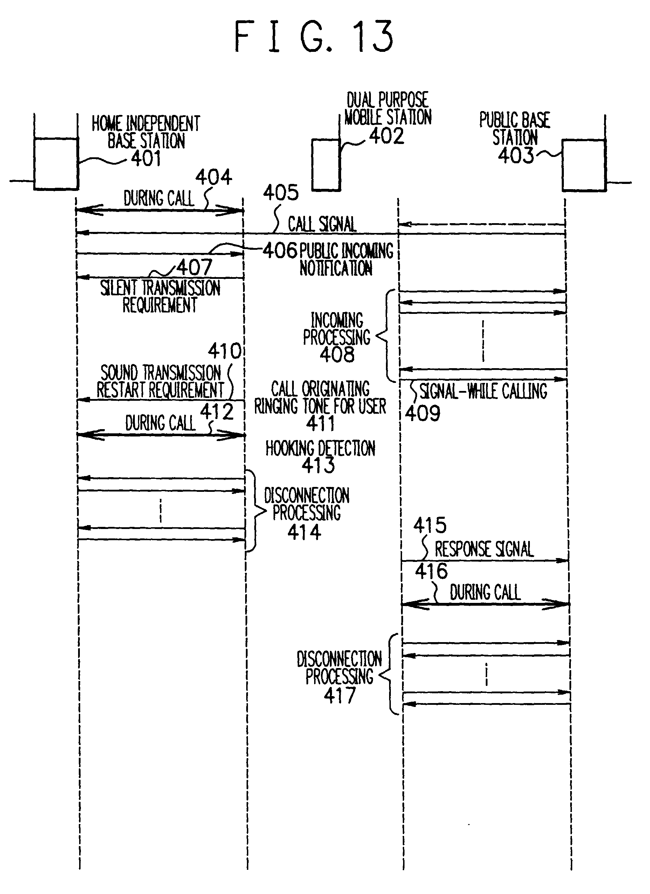

Fig. 13 is an operation sequence diagram showing the first embodiment of the invention. When the public base station 403 transmits call signal (405) to the dual purpose mobile station during the telephone call (404) in between the home independent base station 401 and the dual purpose mobile station 402, the home independent base station receives it to transmit the public reception notification (406) to the dual purpose mobile station using accompanying control channel. There are two systems in the accompanying control channel that one system is capable of transmitting control information without breaking voice, and another system is capable of transmitting control information with breaking voice. The present embodiment uses the system in which the control information is transmitted without breaking voice. When the dual purpose mobile station receives the control information, executing the incoming processing while stopping the telephone call temporarily, consequently, transmitting silent transmission requirement (407) in order to cause the home independent base station to perform silent transmission. Subsequently, the dual purpose mobile station stops the telephone call to implement the incoming processing (408). The dual purpose mobile station transmits during-telephone call signal (409) for notifying that calling of user is in progress to the public base station at the end of the incoming processing. In order to return to the telephone call in between the dual purpose mobile station 402 and the home independent base station, the dual purpose mobile station stops the silent transmission to the fixed network. The dual purpose mobile station 402 returns to the telephone call (412) while transmitting a voice transmission restart requirement (410) for transmitting a sound signal, simultaneously transmitting (411) a ringing tone to notify reception of signal to the user. When the dual purpose mobile station 402 detects response from the user, namely detects hooking (413), executing disconnection processing (414) for disconnecting indoor self-supporting telephone call. When disconnection is completed, the dual purpose mobile station 402 shifts therefrom to the telephone call (416) while transmitting a response signal (415) to the public base station. When the telephone call ends, the dual purpose mobile station returns to the state of receive-queuing while executing disconnection processing (417).

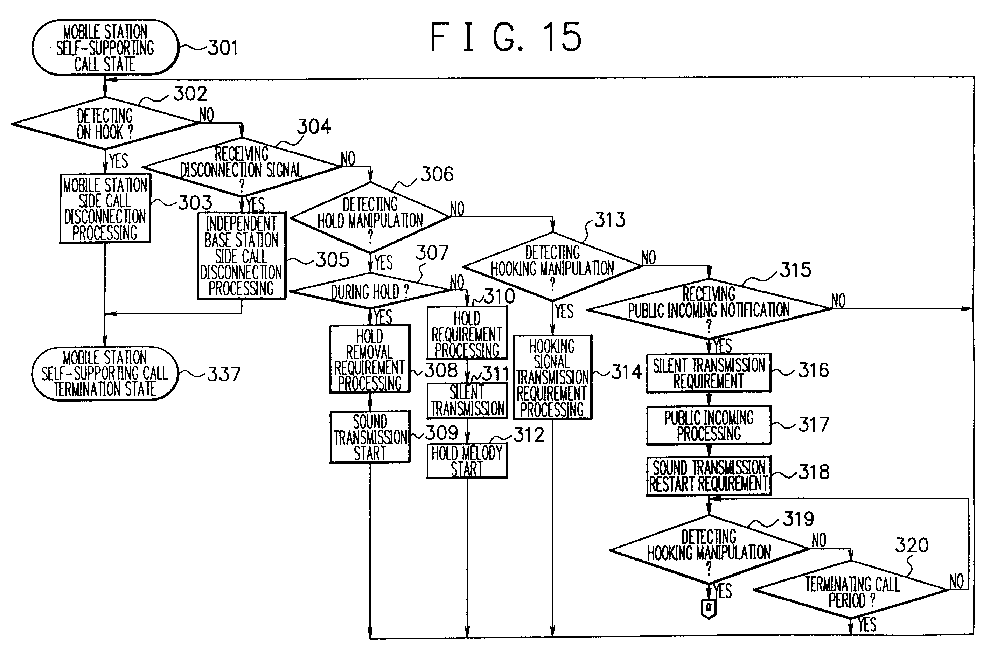

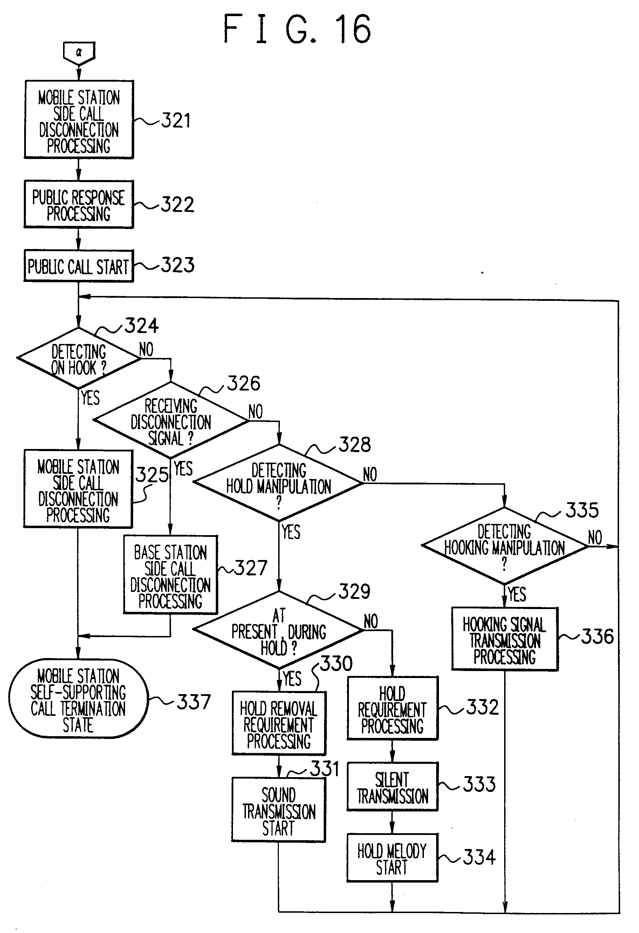

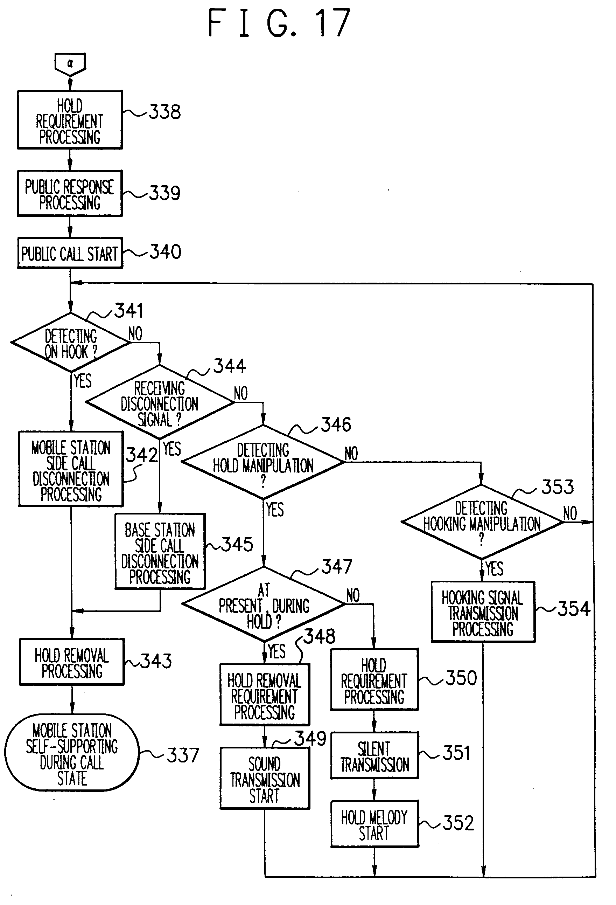

Figs. 16 and 17 are flow charts showing operation of the dual purpose mobile station according to the first embodiment of the present invention. The following operation after **α** of Fig. 15 is shown in Fig. 16. When the dual purpose mobile station control section detects on-hook (302) during indoor self-supporting telephone call (301), causing the dual purpose mobile station to shift to a telephone call end state (337), while executing telephone call disconnection processing (303) which is actuated from the side of mobile station. While when the dual purpose mobile station control section receives disconnection signal (304) from the home independent base station without detecting on-hook (302), causing the dual purpose mobile station to shift to the telephone call end state (337), while executing telephone call disconnection processing (305) which is actuated from the independent base station. When the dual purpose mobile station control section does not receive a disconnect signal from the home independent base station (304), but detecting hold-manipulation by the user (306), and the indoor self-supporting telephone call is during the hold (307), it causes transmission of sound signal to be resumed (309) while executing processing (308) to remove holding of indoor self-supporting telephone call which is held. When the dual purpose mobile station control section does not receive a disconnection signal from the home independent base station (304), but detecting hold-manipulation by the user (306), and the indoor self-supporting telephone call is of during the hold (307), it causes transmission of sound signal to be resumed (309) while executing processing (308) to remove the hold of indoor self-supporting telephone call which is held. The dual purpose mobile station rings hold-melody for notifying the during-hold to the user (312). When the dual purpose mobile station control section does not detect the hold manipulation by the user (306) but detects hooking manipulation by the user (313), executing transmission requirement processing of the hooking signal to the home independent base station (314). When the dual purpose mobile station control section does not detect the hooking manipulation by the user (313), but receives public incoming notification from the home independent base station (315), thus transmitting silent transmission requirement to the home independent base station (316). The dual purpose mobile station control section implements the incoming processing to the public base station therebetween (317) before transmitting voice transmission restart requirement to the home independent base station (318). At this time, when the dual purpose mobile station detects the hooking manipulation (319), causing switching of telephone call to be executed (reference number continues to Fig. 16). When the dual purpose mobile station does not detect the hooking manipulation (319), continuing to monitor the hooking manipulation until ending a calling period (320). When the calling period ends, the dual purpose mobile station maintains the indoor self-supporting telephone call. Further when the dual purpose mobile station does not receive the public incoming notification from the home independent base station (315), the indoor self-supporting telephone call is maintained.

Next, operation (telephone call switching operation) after **α** of Fig. 15 will be explained according to Fig. 16. In the first embodiment, the telephone call disconnection processing (321) which is actuated from the side of mobile station is executed, it causes the public telephone call to be started (323) while executing public response processing (322) in which response from the user is notified to the public base station. During public telephone call, when the on-hook is detected (324), the telephone call disconnection processing (325) which is actuated from the mobile station, thus shifting to the telephone call end state (337). While when disconnection signal is received from the home independent base station (326) without detecting the on-hook (324), executing the telephone call disconnection processing (327) which is actuated from the home independent base station, thus shifting to the telephone call end state (337). When the dual purpose mobile station does not receive a disconnection signal from the home independent base station (326), but detecting hold-manipulation by the user (328), and the indoor self-supporting telephone call is during hold state (329), it causes transmission of sound signal to be resumed (331) while executing processing (332) to remove the hold of indoor self-supporting telephone call which is held. When the dual purpose mobile station does not hold an indoor self-supporting telephone call (329), executing processing of the hold of the indoor self-supporting telephone call (332), making sound signal transmitted silent (333), thus ringing hold-melody for notifying during hold to the user (334). While when the dual purpose mobile station does not detect the hold-manipulation by the user, but detects hooking operation (335), thus transmitting hooking signal (226) to the public base station. When the dual purpose mobile station does not detect the hooking manipulation, maintaining the outdoor public telephone call.

Next, the second embodiment of the invention will be described referring to the drawing.

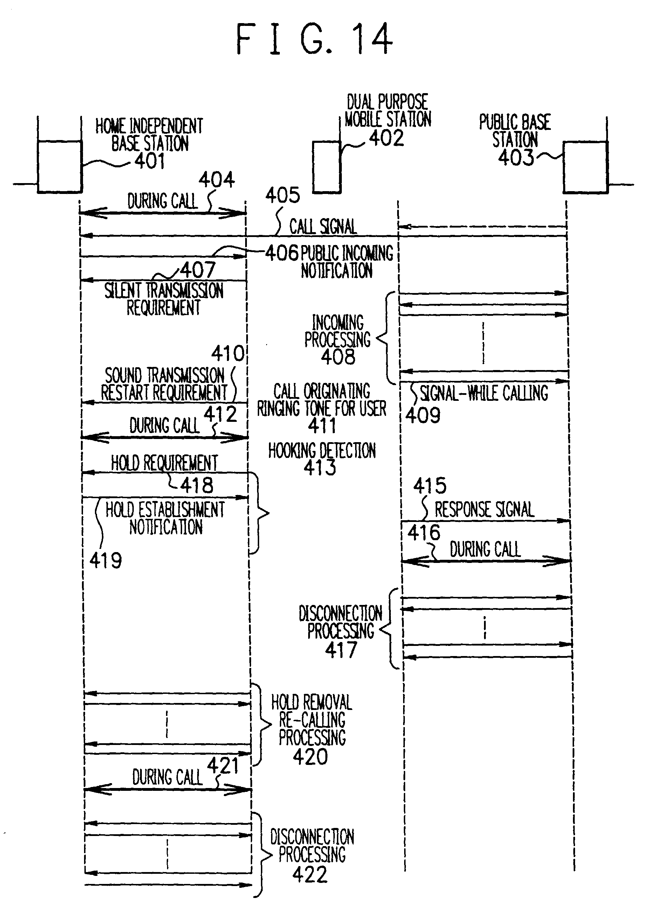

Fig. 14 is operation sequence diagram showing operation of the second embodiment of the present invention. During telephone call (404) in between the home independent base station 401 and the dual purpose mobile station 402, when the public base station 403 transmits call signal (405) to the dual purpose mobile station, the home independent base station receives it to transmit the public incoming notification (406) to the dual purpose mobile station using accompanying control channel. When the dual purpose mobile station receives it to transmit a silent transmission requirement (407) to the home independent base station in order to execute silent transmission for executing incoming processing while stopping telephone call temporarily. Subsequently, the dual purpose mobile station executes the incoming processing (408) while stopping telephone call thereof. At the end of the incoming processing, the dual purpose mobile station transmits the during-call signal (409) notifying that telephone call of the user is in progress toward the public base station. In order to return to the telephone call in between the home independent base station and the dual purpose mobile station, the dual purpose mobile station stops silent transmission to the fixed network, thus returning to the telephone call (412) while transmitting the voice transmission restart requirement (410) in order to transmit the sound signal. Simultaneously, the dual purpose mobile station transmits the ringing tone for notifying the incoming to the user (411), when detecting response of the user namely hooking (413), thus executing hold-requirement (418) to the home independent base station to hold the indoor self-supporting telephone call. The dual purpose mobile station shifts to the telephone call (416) while notifying setting of hold state from the home independent base station. Then when the telephone call is terminated, the disconnection processing (417) is executed. Further, in order to perform telephone call again while removing the hold of indoor self-supporting telephone call, the dual purpose mobile station executes hold-removing re-call out processing (420) to resume the indoor self-supporting telephone call (421). When the telephone call is terminated, the dual purpose mobile station executes disconnection processing (422) to return to the state of the incoming queuing.

Figs. 15 and 17 are flow chart diagram showing operation of the dual purpose mobile station control section according to the second embodiment of the present invention. Operation after **α** of Fig. 15 is shown in Fig. 17. When the dual purpose mobile station control section detects the on-hook (302) during indoor self-supporting telephone call (301), causing the dual purpose mobile station to shift to a telephone call end state (337), while executing telephone call disconnection processing (303) which is actuated from the side of the mobile station. While when the dual purpose mobile station control section receives disconnection signal (304) from the home independent base station without detecting the on-hook (302), causing the dual purpose mobile station to shift to the telephone call end state (337), while executing telephone call disconnection processing (305) which is actuated from the independent base station. When the dual purpose mobile station control section does not receive a disconnection signal from the home independent base station (304), but detecting hold-manipulation by the user (306), and the indoor self-supporting telephone call is of the during-hold (307), it causes transmission of sound signal to be resumed (309) while executing processing (308) to remove the hold of indoor self-supporting telephone call which is held. The dual purpose mobile station rings hold-melody for notifying the during-hold to the user (312). When the dual purpose mobile station control section does not detect the hold manipulation by the user (306) but detects hooking manipulation by the user (313), executing transmission requirement processing of the hooking signal to the home independent base station (314). When the dual purpose mobile station control section does not detect the hooking manipulation by the user (313), but receives public incoming notification from the home independent base station (315), thus transmitting silent transmission requirement to the home independent base station (316). The dual purpose mobile station control section executes the incoming processing to the public base station therebetween (317) before transmitting voice transmission restart requirement to the home independent base station (318). At this time, when the dual purpose mobile station detects the hooking manipulation (319), causing switching of telephone call to be executed ( code **α**, reference number continues to Fig. 17). When the dual purpose mobile station does not detect the hooking manipulation (319), continuing to monitor the hooking manipulation until ending the calling period (320). When the calling period ends, the dual purpose mobile station maintains the indoor self-supporting telephone call. Further when the dual purpose mobile station does not receive the public incoming notification from the home independent base station (315), the indoor self-supporting telephone call is maintained.

Next, operation (telephone call switching operation) after **α** of Fig. 15 will be described according to Fig. 17. In the second embodiment, in order to perform holding of the indoor self-supporting telephone call, the dual purpose mobile station executes hold requirement processing (338) to the home independent base station, and executes incoming processing (339) to the public base station, before starting public telephone call (340). During public telephone call, when detecting the on-hook (341), the dual purpose mobile station executes telephone call disconnection processing (342) which is actuated from the mobile station. The dual purpose mobile station returns to the during indoor self-supporting telephone call state (301) while executing hold removal re-call out processing (343) for resuming telephone call by removing the hold. While when the dual purpose mobile station does not detect the on-hook (341), but receives disconnection signal from the home independent base station (344), thus executing the telephone call disconnection processing (345) which is actuated from the independent base station. The dual purpose mobile station shifts to the during indoor self-supporting telephone call state (301) while executing the hold removal re-call out processing (343) for resuming telephone call by removing the hold. The dual purpose mobile station does not receive the disconnection signal from the home independent base station (344), detecting hold manipulation by the user, and the indoor self-supporting telephone call is of on-hold (347), restarting transmission of sound signal (349) while executing processing (348) which removes the hold of the indoor self-supporting telephone call being of on-hold. While when in the dual purpose mobile station, the indoor self-supporting telephone call is not of the during-hold (347), executing the processing (350) that it causes the indoor self-supporting telephone call to perform the during hold, thus making sound signal to be transmitted silent (351), before ringing a hold-melody in order to notify the during-hold to the user (352). When the dual purpose mobile station does not detect the hold manipulation by the user (346), but detects the hooking manipulation (353), transmitting the hooking signal to the public base station (354). The dual purpose mobile station maintains the outdoor public telephone call unless the hooking manipulation is detected.

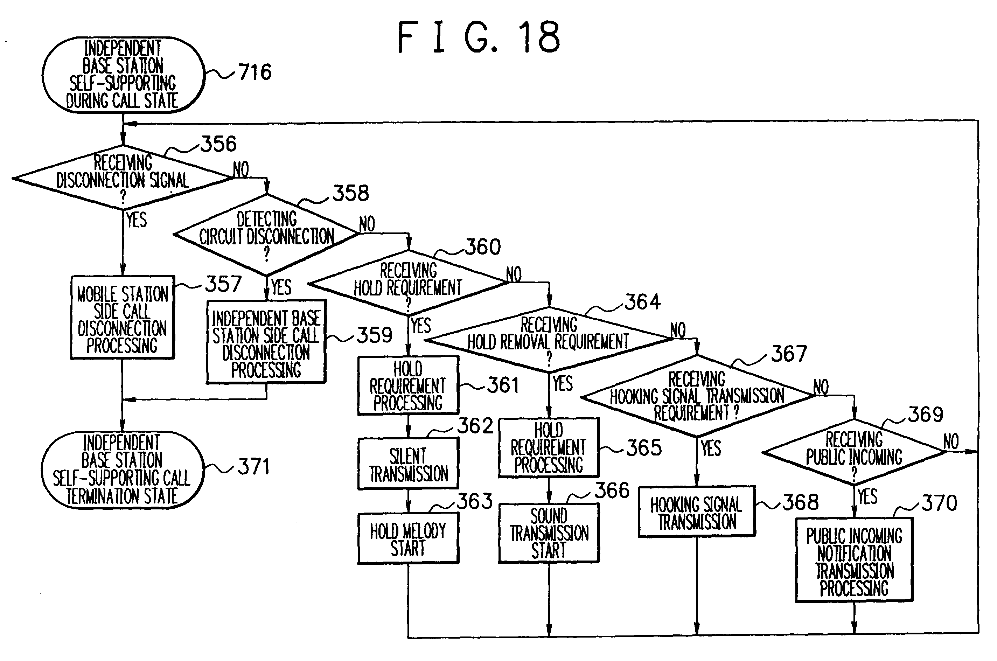

Finally, operation of the home independent base station control section common to the above described the first and the second embodiments will be described referring to Fig. 18.

Fig. 18 is a flow chart showing operation of the indoor self-supporting telephone call of the home independent base station control section according to the present invention. When the home independent base station control section receives a disconnection signal (358) during the period of the indoor self-supporting telephone call state (355), shifting to indoor self-supporting telephone call end state (371) while executing telephone call disconnection processing (357) which is actuated from the mobile station. When the home independent base station control section does not receive the disconnection signal (356), but detects line disconnection (358), shifting to indoor self-supporting telephone call end state (371) while executing telephone call disconnection processing (359) which is actuated from the independent base station. When the home independent base station control section does not detect the line disconnection (358), but receives hold requirement from the dual purpose mobile station (360), executing the processing (361) which makes the indoor self-supporting telephone call of the during hold, making the sound signal to be transmitted silent (362), before ringing hold-melody in order to notify the during hold state to the user (363). When the home independent base station control section does not receive the hold requirement from the dual purpose mobile station (360), but receives hold removal requirement (364), restarting transmission of sound signal (366) while executing the processing (365) which removes the during hold state of the indoor self-supporting telephone call operation. The home independent base station control section does not receive the hold removal requirement from the dual purpose mobile station (364), but receives hooking signal transmission requirement (367), transmitting the hooking signal (368). When the home independent base station control section does not receive the hooking signal transmission requirement from the dual purpose mobile station (367), but receives call signal from the public base station to the dual purpose mobile station (369), transmitting public incoming notification transmission to the dual purpose mobile station by accompanying control channel (370).

As described above, in accordance with the present invention, the home independent base station is provided with the public reception control section, the mobile station reception channel CODEC section, the reception radio circuit, the public reception antenna, and the public reception interface section, wherein the home independent base station receives the call signal transmitted from the public base station to the dual purpose mobile station instead of the dual purpose mobile station, before transmitting the call waiting notification signal to the dual purpose mobile station by means of accompanying control channel, thus the mobile station is capable of receiving from the public base station due to the fact that the dual purpose mobile station receives the call waiting notification signal. Consequently, the user of the dual purpose mobile station can find the incoming from the public base station within the area which is capable of being received both radio waves of the public base station and the home independent base station during indoor self-supporting telephone call, thus the user can find that the service is utilized if the user utilizes an absence telephone service and so forth.

Further, the home independent base station is provided with the public reception control section, the mobile station reception channel CODEC section, the reception radio circuit, the public reception antenna, and the public reception interface section, wherein the home independent base station transmits the call waiting notification signal to the dual purpose mobile station by means of the accompanying control channel while receiving the call signal transmitted from the public base station to the dual purpose mobile station instead of the dual purpose mobile station. The dual purpose mobile station receives the call waiting notification signal so that the user becomes possible to recognize the incoming from the public base station. If the user responds thereto, it is capable of shifting to the outdoor public telephone call by executing incoming processing in between the public base station and the dual purpose mobile station while the dual purpose mobile station causes the indoor self-supporting telephone call to be the during-hold state temporarily. Consequently, when there is a telephone call from the public base station during indoor self-supporting telephone call, the user can shift to the outdoor public telephone call, while disconnecting or holding the indoor self-supporting telephone call.

While preferred embodiments of the invention have been described using specific terms, such description is for illustrative purpose only, and it is to be understood that changes and variations may be made without departing from the spirit or scope of the following claims.

## Claims

1. A cordless telephone system comprising:
an independent base station (401) connected to a fixed network;
a mobile station (402) connected to said independent base station (401) and either to a peculiar mobile communication network or said fixed network; and
a public base station (403) in which an original communication service control of a mobile communication is executed,
wherein when said mobile station (402) is of the telephone call through said independent base station (401), said public base station (403) transmits a call signal to said mobile station (402), said independent base station (401) receives said call signal instead of said mobile station (402) and transmits a call waiting notification signal which represents reception of said call signal, to said mobile station (402) during the telephone call in between said mobile station (402) and said independent base station (401);
said mobile station (402) receives said call waiting notification signal from said independent base station (401), before executing an incoming processing in between said mobile station (402) and said public base station (403) while executing a temporary holding of the present telephone call, when said incoming processing ends, thus calling the user thereto by returning to the telephone call, and when there is a response from said user, enabling the mobile station itself to execute the telephone call to said public base station (401) while either disconnecting or holding the telephone call toward said independent base station (401), and when the telephone call toward said public base station (403) is terminated, if the telephone call for said independent base station (401) is maintained holding state, enabling the call operation to continue while removing the holding state.

2. A cordless telephone system as claimed in claim 1, wherein said independent base station comprises:
an antenna (104) for performing transmission-reception of radio waves;
a transmitter-receiver radio circuit (103) for executing both of demodulation of received radio wave and modulation of transmission data;
an independent base station channel CODEC section (102) for executing both of decoding of a demodulation signal from said transmitter-receiver radio circuit (103) and coding of transmission data;
a call / circuit control section (101) for executing voice coding of a sound signal received from a fixed network, and voice decoding of a voice data which is decoded at said independent base station channel CODEC section (102), and for receiving a call signal from said fixed network;
a home independent base station control section (105) for executing power control among said call / circuit control section (101), said independent base station channel CODEC section (102), and said transmitter-receiver radio circuit (103), and for executing communication protocol control in between said independent base station control section (105) and a mobile station;
a public reception antenna (109) for receiving radio waves which is transmitted from a public base station;
a reception radio circuit (108) for executing demodulation of received radio wave from said public reception antenna (109);
a mobile station reception channel CODEC section (107) for executing decoding of a demodulation signal from said reception radio circuit (108);
a public reception control section (106)for detecting a call signal for said mobile station among the decoded data from said mobile station reception channel CODEC section (107) to notify it to said home independent base station control section (105); and
a public reception interface section (105a) which is provided within said home independent base station control section (105) for receiving call signal detection notification from said public reception control section (106),
wherein said independent base station receives a call signal which is transmitted from said public base station to said mobile station during the telephone call through said independent base station, subsequently, said mobile station receives call waiting notification signal from said independent base station, before said mobile station disconnects the telephone call through said independent base station by manipulation of the user with the result that it is capable of shifting to the telephone call through said public base station.

3. A cordless telephone system as claimed in claim 2, wherein said independent base station receives the call signal which is transmitted from said public base station to said mobile station during the telephone call state through said independent base station, subsequently, said mobile station receives the call waiting notification signal from said independent base station, before said mobile station shifts to the telephone call through said public base station while holding the telephone call temporarily through said independent base station by manipulation of the user, then causing the holding state to be removed after disconnection of the telephone call through said public base station, with the result that it is capable of being returned to the telephone call through said independent base station.

4. In a cordless telephone system, a mobile station comprising:
an antenna (204) for performing transmission-reception of radio waves;
a transmitter-receiver radio circuit (203) for executing both of demodulation of received radio wave and modulation of transmission data;
a mobile station channel CODEC section (202) for executing both of decoding of demodulation signal from said transmitter-receiver radio circuit (203) and coding of the transmission data;
a speaker (206) for outputting voice;
a microphone (207) for inputting voice;
a call control section (201) for executing both of voice coding of sound signal received from said microphone (207) and voice decoding of voice data decoded at said mobile station channel CODEC section (202);
a mobile station control section for executing both of power control of said call control section (201), said mobile station channel CODEC section (202), and said transmitter-receiver radio circuit (203) and for executing communication protocol control; and
a call waiting notification detecting section (205a) which is provided within said mobile station control section (205), being capable of receiving the call waiting notification signal which represents that the public base station transmits call signal to said mobile station through said independent base station, while said mobile station control section is of the telephone call through said independent base station.

5. In a cordless telephone system, a independent base station comprising:
an antenna (104) for performing transmission-reception of radio wave;
a transmitter-receiver radio circuit (103) for executing both of demodulation of received radio waves and modulation of transmission data;
a independent base station channel CODEC section (102) for executing both of decoding of demodulation signal from said transmitter-receiver radio circuit (103) and coding of the transmission data;
a call / circuit control section (101) for executing both of voice coding of a sound signal received from a fixed network, and voice decoding of a voice data which is decoded at said independent base station channel CODEC section (102), and for receiving a call signal from said fixed network;
a home independent base station control section (105) for executing power control among said call / circuit control section (101), said independent base station channel CODEC section (102), and said transmitter-receiver radio circuit (103), and for executing communication protocol control in between said independent base station and a mobile station;
a public reception antenna (109) for receiving radio wave which is transmitted from a public base station;
a reception radio circuit (108) for executing demodulation of received radio waves from said public reception antenna (109);
a mobile station reception channel CODEC section (107) for executing decoding of demodulation signal from said reception radio circuit (108];
a public reception control section (106) for detecting a call signal for said mobile station among decoded data from said mobile station reception channel CODEC section (107) to notify to said home independent base station control section; and
a public reception interface section (105a) which is provided within said home independent base station control section (105), for receiving the call signal detection notification from said public reception control section (106),
wherein when said public reception interface section (105a) receives a call signal detection notification from said public reception control section (106), said public base station transmits the call waiting notification signal notifying that it causes the call signal to be transmitted to said mobile station.

6. In a cordless telephone system, a independent base station as claimed in claim 5, wherein said home independent base station control section (105), said public reception interface section (105a), and said public reception control section 106 constitute one block or a plurality of blocks.

7. In a cordless telephone system, a independent base station as claimed in claim 5, wherein said independent base station channel CODEC section (102) and said mobile station reception channel CODEC section (107) constitute one block or a plurality of blocks.

8. In a cordless telephone system, a independent base station as claimed in claim 5, wherein said transmitter-receiver radio circuit (103) and said reception radio circuit (108) constitute one functional block or a plurality of functional blocks.

9. A cordless telephone system including a independent base station which is connected to a fixed network, a mobile station which is connected to said independent base station and either to a peculiar mobile communication network or a fixed network, and a public base station in which an original communication service control of said mobile communication is executed, wherein when said mobile station is of the telephone call through said independent base station, said public base station transmits a call signal to said mobile station, a radio communication method comprising the steps of:
receiving a call signal by means of an independent base station instead of a mobile station and transmitting a call waiting notification signal which represents reception of said call signal toward said mobile station during the telephone call in between said mobile station and said independent base station;
executing an incoming processing in between said mobile station and said public base station while executing a hold-manipulation in relation to the present telephone call temporarily, after said mobile station receives said call waiting notification signal from said independent base station;
calling the user by returning to the telephone call, when said incoming processing ends;
enabling the mobile station itself to execute the telephone call to said public base station while either disconnecting or holding the telephone call in relation to said independent base station, when there is a response from the user; and
enabling the telephone call to continue by removing the holding state, when the telephone call in relation to said public base station is terminated, and if the telephone call for said independent base station is maintained by way of the holding state.

10. A radio communication method of an independent base station comprising the steps of:
performing transmission-reception of radio wave by means of an antenna;
executing both of demodulation of received radio wave and modulation of transmission data by means of a transmitter-receiver radio circuit;
executing both of decoding of demodulation signal from said transmitter-receiver radio circuit and coding of transmission data by means of an independent base station channel CODEC section;
executing both of voice decoding of a voice data which is decoded at said independent base station channel CODEC section, and voice coding of a sound signal from said fixed network, and receiving a voice coding of a sound signal received from a fixed network by means of a call / circuit control section;
executing communication protocol control among said call / circuit control section, said independent base station channel CODEC section, a power control of said transmitter-receiver radio circuit and a mobile station by means of a home independent base station control section;
receiving radio waves which a public base station transmits, by means of a public reception antenna;
executing demodulation of received radio wave from said public reception antenna by means of a reception radio circuit;
executing decoding of demodulation signal from said reception radio circuit by means of a mobile station reception channel CODEC section;
detecting a call signal for said mobile station among the decoded data from said mobile station reception channel CODEC section to notify to said home independent base station control section by means of a public reception control section; and
receiving call signal detection notification from said public reception control section by means of a public reception interface section which is provided within said home independent base station control section,
wherein said independent base station receives a call signal which is transmitted from said public base station to said mobile station during the telephone call through said independent base station, subsequently, said mobile station receives call waiting notification signal from said independent base station, before said mobile station disconnects the telephone call through said independent base station by manipulation of the user with the result that it is capable of shifting to the telephone call through said public base station.

11. A radio communication method of a mobile station comprising the steps of:
performing transmission-reception of radio wave by means of an antenna;
executing both of demodulation of received radio wave and modulation of transmission data by means of a transmitter-receiver radio circuit;
executing both of decoding of demodulation signal from said transmitter-receiver radio circuit and coding of the transmission data by means of a mobile station channel CODEC section;
outputting voice by means of a speaker;
inputting voice by means of a microphone;
executing both of voice coding of sound signal received from said microphone and voice decoding of voice data decoded at said mobile station channel CODEC section by means of a telephone call control section;
executing both of power control of said telephone call control section, said mobile station channel CODEC section, and said transmitter-receiver radio circuit and communication protocol control by means of a mobile station control section; and
being capable of receiving the call waiting notification signal which represents that the public base station transmits call signal to said mobile station through said independent base station while said mobile station control section is of the telephone call through said independent base station by means of a call waiting notification detecting section which is provided within said mobile station control section.

12. A radio communication method of an independent base station comprising the steps of:
performing transmission-reception of radio wave by means of an antenna;
executing both of demodulation of received radio wave and modulation of transmission data by means of a transmitter-receiver radio circuit;
executing both of decoding of demodulation signal from said transmitter-receiver radio circuit and coding of the transmission data by means of a independent base station channel CODEC section;
executing both of voice coding of a sound signal received from a fixed network, and voice decoding of a voice data which is decoded at said independent base station channel CODEC section, and receiving a call signal from said fixed network by means of a call / circuit control section;
executing power control among said call / circuit control section, said independent base station channel CODEC section, and said transmitter-receiver radio circuit, and communication protocol control in between a mobile station and a home independent base station control section;
receiving radio wave which is transmitted from a public base station, by means of a public reception antenna;
executing demodulation of received radio waves from said public reception antenna by means of a reception radio circuit;
executing decoding of demodulation signal from said reception radio circuit by means of a mobile station reception channel CODEC section; and
detecting a call signal for said mobile station from decoded data from said mobile station reception channel CODEC section to notify to said home independent base station control section by means of a public reception control section,
wherein when said public reception interface section receives a call signal detection notification from said public reception control section, said public base station transmits the call waiting notification signal notifying that it causes the call signal to be transmitted to said mobile station.
